# EUROPEAN PATENT APPLICATION

(11) **EP 4 118 950 A1**
(43) Date of publication of application: **18.01.2023**
(21) Application number: 22184561.3
(22) Date of filing: 12.07.2022
(51) Int. Cl.: A01F 15/07

(54) **BALE WRAPPER**

(30) Priority: 13.07.2021 GB 202110095
(71) Applicant: Kuhn-Geldrop B.V., 5667 KP Geldrop (NL)
(72) Inventor: BULLENS, Henricus Petrus Gerardus, 5841 AS Oploo (NL); VAN AMSTEL, Leonardus Hendrikus Maria, 5663 RW Geldrop (NL)
(74) Representative: Murgitroyd & Company

(57) **Abstract**

A baler-wrapper (2) comprises a baler (4) having a baling chamber in which a bale is made, a binder (24) that binds the bale with film in the baling chamber (20), a wrapper (6) that wraps the bale after binding, and a controller that controls operation of the baler-wrapper (2). The baler-wrapper (2) is configured to wrap the bale by applying first and second strips of stretched film in edge wrapping patterns and applying at least one strip of stretched film to the bale surface in a longitudinal wrapping pattern. The bale wrapping either (a) does not include a central circumferential wrapping that overlaps the side portions of the first and second edge wrappings, or (b) includes a central circumferential wrapping that overlaps the edge wrappings, wherein the number of layers of film in the central circumferential wrapping is less than the number of layers of film in the edge wrappings.

## Description

The present invention relates to a bale wrapper and a procedure for wrapping a bale. The invention also relates to a baler-wrapper and a procedure for baling and wrapping a bale.

In particular but not exclusively the bale may be an agricultural bale of crop material, for example straw or hay etc. The bale may optionally be a round bale that is substantially cylindrical in shape, comprising two circular end faces and a substantially cylindrical circumferential side face that extends between the two end faces. An edge region is formed where the circumferential side face meets each of the end faces. Such bales are well known and typically have a diameter of about 130 centimetres and a length of about 120 centimetres measured in the axial direction of the bale. Larger and smaller round bales are also known.

Round bales of the type described above may be formed by rotating and compressing crop material between belts or rollers in the baling chamber of a baler. Once the bale has formed it may be bound with a binding material to maintain the crop material in compression and help the bale retain its shape when it is ejected from the baling chamber. The binding material may for example be a net material or a stretch plastic film material, which is stretched around the circumferential side face of the bale in a circumferential binding pattern. The binding material may be stretched by varying degrees of elongation when it is applied to the bale, according to the nature of the binding material: for example, the binding material may be elongated by 5-15% for net material and some plastic film materials, or 70% or more with highly-elastic plastic film materials.

After the bale has been formed it may optionally be wrapped in plastic film by a bale wrapper to form an airtight wrapping that covers the entire bale surface. This wrapping protects the bale and enables a fermentation process to take place, transforming the crop material into silage or fodder.

The wrapping may comprise one or more wrapping layers, which may for example be applied in a wrapping pattern in which one or more strips of plastic film are applied over the circumferential side face and the end faces of the bale. Relative rotation is provided between the bale and the wrapper and wrapping is continued until the entire bale surface is covered. In this document we call this conventional wrapping pattern a longitudinal wrapping pattern by virtue of the fact that the strips of film applied to the cylindrical surface of the bale extend approximately in a longitudinal direction: i.e. approximately parallel to the axis of the bale. An alternative wrapping pattern in which strips of film are stretched around the circumferential surface of the bale, for example in the manner of the binding, will be referred to in this document as a circumferential wrapping pattern.

Usually several wrapping layers are required to form an airtight wrapping.

Typically, four, six, eight or more wrapping layers are provided. The wrapping layer or layers may be applied using a bale wrapper, which may be either a stand-alone machine that wraps bales after they have been ejected from a separate baler, or it can be part of a combined baler-wrapper, which forms and binds a bale in a baling chamber and then transfers the finished bale to a wrapper where the wrapping is applied.

A procedure for wrapping a bale is described in WO01/76353A. In this procedure, a circumferential wrapping layer is wound onto the circumferential side face of the bale and bent around the edge regions so that it extends partially onto the end faces of bale. A longitudinal wrapping layer is also applied, which covers the circumferential side face and the end faces of bale. This combination of circumferential and longitudinal wrapping layers is said to produce a better wrapping result, reducing the risk of mould, improving the quality of the fodder and reducing consumption of the plastic film material.

In WO01/76353A it is not mentioned what kind of binding material is used to bind the bale. However, it is known to people skilled in the art that bale wrapping machines embodying the invention used net binding material, as was conventional at the priority date of the patent application (7 April 2000).

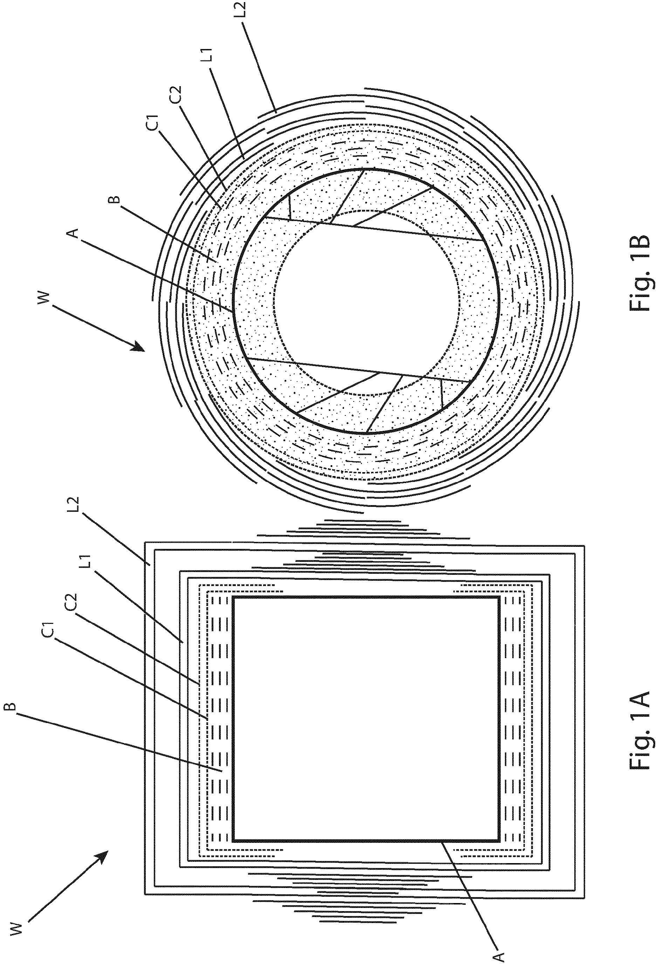

A binding and wrapping pattern produced according to the procedure described in WO01/76353A is illustrated schematically in figures 1A and 1B, where figure 1A is a sectional side view of a wrapped bale and figure 1B is an end view of the bale. The bale A is bound with three layers of net binding material, which are wrapped around the circumferential surface of the bale to form a binding B. The wrapping W comprises a circumferential wrapping C1, C2 plus first and second longitudinal wrappings L1, L2. The circumferential wrapping is formed by winding stretch plastic film twice around the circumferential side face of the bale to form first and second circumferential wrapping layers C1, C2. The first and second longitudinal wrappings L1, L2 are then applied to complete the wrapping W. Each of the first and second longitudinal wrapping L1, L2 comprises two layers of stretch plastic film. The stretched film is applied to the bale surface in a longitudinal wrapping pattern by a pair of film dispensers during a half turn of the bale about its axis.

Although the wrapping procedure described in WO01/763538A provides a reduction in the use of plastic film compared to some previous wrapping procedures, it remains important for environmental and economic reasons to seek ways to reduce still further the consumption of plastic film without compromising the integrity of the wrapping. It is an object of the present invention to provide a wrapping procedure and a bale wrapper which address this and other issues. This object also extends to providing a method of baling and wrapping a bale, a combined baler-wrapper, and a wrapped bale.

In one aspect of the invention there is provided a bale wrapper as defined by the claims.

In another aspect of the invention there is provided a baler-wrapper as defined by the claims.

In another aspect of the invention there is provided a procedure for wrapping a bale as defined by the claims.

In another aspect of the invention there is provided a procedure for binding and wrapping a bale as defined by the claims.

In one embodiment there is provided a baler-wrapper for making, binding and wrapping a bale having a bale surface comprising first and second end faces, a circumferential side face and first and second edge regions where the circumferential side face meets the first and second end faces respectively, the baler-wrapper comprising:
- a baler having a baling chamber in which the bale is made,
- a binder that binds the bale in the baling chamber,
- a wrapper that wraps the bale after binding, and
- a controller that controls operation of the baler-wrapper,
wherein the baler-wrapper is configured to:
- make a bale in the baling chamber,
- bind the bale in the baling chamber by passing at least one strip of stretched film in a circumferential binding pattern around the circumferential side face to form a binding,
- transfer the bale to the wrapper, and
- wrap the bale by:
- applying first and second strips of stretched film in edge wrapping patterns to the first and second edge regions respectively to form first and second edge wrappings, such that:
- each of the first and second edge wrappings comprises a side portion that covers an end part of the circumferential side face and a face portion that covers an outer part of a respective one of the first and second end faces,
- the side portion of each of the first and second edge wrappings partially overlaps a respective edge portion of the binding, and
- the side portions of the first and second edge wrappings are separated from one another and do not overlap a central portion of the binding, and
- applying at least one strip of stretched film to the bale surface in a longitudinal wrapping pattern that passes over the first and second end faces and the circumferential side face to form a longitudinal wrapping that fully covers the bale surface,
wherein the bale wrapping, which does not include the binding, either:
(a) does not include a central circumferential wrapping that overlaps the side portions of the first and second edge wrappings, or
(b) includes a central circumferential wrapping that overlaps the side portions of the first and second edge wrappings, and the number of layers of film in the central circumferential wrapping is less than the number of layers of film in the first and second edge wrappings.

Optionally, the controller is configured to control operation of the wrapper such that the number of layers of film in the central circumferential wrapping is determined by the controller according to the number of layers of stretched film that form the binding.

Optionally, the controller is configured to control operation of the wrapper such that the number of layers of stretched film applied to the edge regions of the bale surface to form the first and second edge wrappings, and/or the number of layers of stretched film applied to the bale surface in a longitudinal wrapping pattern to form the longitudinal wrapping, is determined by the controller according to the number of layers of stretched film that form the binding.

Optionally, the controller is configured to control operation of the wrapper to apply a predetermined minimum number of layers of stretched film to the bale surface, the predetermined minimum number of layers of stretched film comprising the binding, the first and second edge wrappings and the longitudinal wrapping.

Optionally, the controller is configured to control operation of the wrapper to apply a predetermined minimum number of layers of stretched film to the entire bale surface and/or to selected locations on the bale surface.

Optionally, the controller is configured to control operation of the wrapper while forming the first and second edge wrappings to apply a predetermined number of layers of stretched film in each of the first and second edge wrappings.

Optionally, the controller is configured to control operation of the wrapper while forming the longitudinal wrapping to apply a predetermined number of layers of stretched film to the circumferential face of the bale in the longitudinal wrapping.

Optionally, the controller includes an operator input device enabling an operator to select a predetermined minimum number of layers of stretched film to be applied to the bale surface.

Optionally, the controller includes an operator display device configured to display the number of layers of stretched film to be applied to the bale surface.

Optionally, the first and second edge wrappings are applied to the bale before the longitudinal wrapping, so that the first and second edge wrappings are located between the binding and the longitudinal wrapping.

Optionally, the longitudinal wrapping comprises a first longitudinal wrapping and a second longitudinal wrapping.

Optionally, the first longitudinal wrapping is applied to the bale before the first and second edge wrappings, so that the first longitudinal wrapping is located between the binding and the first and second edge wrappings, and the second longitudinal wrapping is applied to the bale after the first and second edge wrappings.

Optionally, the first and second longitudinal wrappings are applied to the bale after the first and second edge wrappings.

Optionally, the baler-wrapper is additionally configured to provide an alternative mode of operation in which the bale is bound with net binding material.

Optionally, the controller is configured to control operation of the wrapper to apply at least one strip of stretched film in a circumferential binding pattern around the circumferential side face to form a circumferential wrapping that covers the net binding material.

In another embodiment there is provided a bale wrapper for wrapping a bale having a bale surface comprising first and second end faces, a circumferential side face, first and second edge regions where the circumferential side face meets the first and second end faces respectively, and a binding comprising at least one layer of stretched film applied in a circumferential binding pattern around the circumferential side face of the bale, wherein the bale wrapper comprises a controller that controls operation of the bale wrapper, wherein the bale wrapper is configured to wrap the bale by:
- applying first and second strips of stretched film in edge wrapping patterns to the first and second edge regions respectively to form first and second edge wrappings, such that:
- each of the first and second edge wrappings comprises a side portion that covers an end part of the circumferential side face and a face portion that covers an outer part of a respective one of the first and second end faces,
- the side portion of each of the first and second edge wrappings partially overlaps a respective edge portion of the binding, and
- the side portions of the first and second edge wrappings are separated from one another and do not overlap a central portion of the binding, and
- applying at least one strip of stretched film to the bale surface in a longitudinal wrapping pattern that passes over the first and second end faces and the circumferential side face to form a longitudinal wrapping that fully covers the bale surface,
wherein the bale wrapping, which does not include the binding, either:
(a) does not include a central circumferential wrapping that overlaps the side portions of the first and second edge wrappings, or
(b) includes a central circumferential wrapping that overlaps the side portions of the first and second edge wrappings, and the number of layers of film in the central circumferential wrapping is less than the number of layers of film in the first and second edge wrappings.

Optionally, the controller is configured to control operation of the wrapper such that the number of layers of film in the central circumferential wrapping is determined by the controller according to the number of layers of stretched film that form the binding.

Optionally, the controller is configured to control operation of the wrapper such that the number of layers of stretched film applied to the edge regions of the bale surface to form the first and second edge wrappings, and/or the number of layers of stretched film applied to the bale surface in a longitudinal wrapping pattern to form the longitudinal wrapping, is determined by the controller according to the number of layers of stretched film that form the binding.

In another embodiment there is provided a procedure for binding and wrapping a bale in a baler-wrapper comprising a baler having a baling chamber, a binder and a wrapper, the bale having a bale surface comprising first and second end faces, a circumferential side face and first and second edge regions where the circumferential side face meets the first and second end faces respectively, the procedure comprising:
- binding the bale in the baling chamber by passing at least one strip of stretched film in a circumferential binding pattern around the circumferential side face to form a binding,
- transferring the bale to the wrapper, and
- wrapping the bale by:
- applying first and second strips of stretched film in edge wrapping patterns to the first and second edge regions respectively to form first and second edge wrappings, such that:
- each of the first and second edge wrappings comprises a side portion that covers an end part of the circumferential side face and a face portion that covers an outer part of a respective one of the first and second end faces,
- the side portion of each of the first and second edge wrappings partially overlaps a respective edge portion of the binding, and
- the side portions of the first and second edge wrappings are separated from one another and do not overlap a central portion of the binding, and
- applying at least one strip of stretched film to the bale surface in a longitudinal wrapping pattern that passes over the first and second end faces and the circumferential side face to form a longitudinal wrapping that fully covers the bale surface,
wherein the bale wrapping, which does not include the binding, either:
(a) does not include a central circumferential wrapping that overlaps the side portions of the first and second edge wrappings, or
(b) includes a central circumferential wrapping that overlaps the side portions of the first and second edge wrappings, and the number of layers of film in the central circumferential wrapping is less than the number of layers of film in the first and second edge wrappings.

Optionally, the procedure further comprises controlling operation of the wrapper such that the number of layers of film in the central circumferential wrapping is determined according to the number of layers of stretched film that form the binding.

Optionally, the procedure further comprises controlling operation of the wrapper such that the number of layers of stretched film applied to the edge regions of the bale surface to form the first and second edge wrappings, and/or the number of layers of stretched film applied to the bale surface in a longitudinal wrapping pattern to form the longitudinal wrapping, is determined according to the number of layers of stretched film that form the binding.

Optionally, the procedure further comprises controlling operation of the wrapper to apply a predetermined minimum number of layers of stretched film to the bale surface, the predetermined minimum number of layers of stretched film comprising the binding, the first and second edge wrappings and the longitudinal wrapping.

Optionally, the procedure further comprises controlling operation of the wrapper to apply a predetermined minimum number of layers of stretched film to the entire bale surface and/or to selected locations on the bale surface.

Optionally, the procedure further comprises controlling operation of the wrapper while forming the first and second edge wrappings to apply a predetermined number of layers of stretched film in each of the first and second edge wrappings.

Optionally, the procedure further comprises controlling operation of the wrapper while forming the longitudinal wrapping to apply a predetermined number of layers of stretched film to the circumferential face of the bale in the longitudinal wrapping.

Optionally, the procedure further comprises detecting an operator input and controlling operation of the wrapper according to the operator input to apply a selected minimum number of layers of stretched film to the bale surface.

Optionally, the procedure further comprises displaying the number of layers of stretched film to be applied to the bale surface on an operator display device.

Optionally, the procedure further comprises the first and second edge wrappings are applied to the bale before the longitudinal wrapping, so that the first and second edge wrappings are located between the binding and the longitudinal wrapping.

Optionally, the longitudinal wrapping comprises a first longitudinal wrapping and a second longitudinal wrapping.

Optionally, the first longitudinal wrapping is applied to the bale before the first and second edge wrappings, so that the first longitudinal wrapping is located between the binding and the first and second edge wrappings.

Optionally, the first and second longitudinal wrappings are applied to the bale after the first and second edge wrappings.

In another embodiment there is provided a procedure for wrapping a bale in a bale wrapper, the bale having a bale surface comprising first and second end faces, a circumferential side face, first and second edge regions where the circumferential side face meets the first and second end faces respectively, and a binding comprising at least one strip of stretched film applied in a circumferential binding pattern around the circumferential side face of the bale, the procedure comprising:
- applying first and second strips of stretched film in edge wrapping patterns to the first and second edge regions respectively to form first and second edge wrappings, such that:
- each of the first and second edge wrappings comprises a side portion that covers an end part of the circumferential side face and a face portion that covers an outer part of a respective one of the first and second end faces,
- the side portion of each of the first and second edge wrappings partially overlaps a respective edge portion of the binding, and
- the side portions of the first and second edge wrappings are separated from one another and do not overlap a central portion of the binding, and
- applying at least one strip of stretched film to the bale surface in a longitudinal wrapping pattern that passes over the first and second end faces and the circumferential side face to form a first longitudinal wrapping that fully covers the bale surface,
wherein the bale wrapping, which does not include the binding, either:
(a) does not include a central circumferential wrapping that overlaps the side portions of the first and second edge wrappings, or
(b) includes a central circumferential wrapping that overlaps the side portions of the first and second edge wrappings, and the number of layers of film in the central circumferential wrapping is less than the number of layers of film in the first and second edge wrappings.

Optionally, the procedure comprises controlling operation of the wrapper such that the number of layers of film in the central circumferential wrapping is determined according to the number of layers of stretched film that form the binding.

Optionally, the procedure comprises controlling operation of the wrapper such that the number of layers of stretched film applied to the edge regions of the bale surface to form the first and second edge wrappings, and/or the number of layers of stretched film applied to the bale surface in a longitudinal wrapping pattern to form the longitudinal wrapping, is determined according to the number of layers of stretched film that form the binding.

In another embodiment there is provided a wrapped bale comprising a bale of bale material, a binding and a wrapping, wherein:
- the bale has a bale surface comprising first and second end faces, a circumferential side face, and first and second edge regions where the circumferential side face meets the first and second end faces respectively,
- the binding comprises at least one strip of stretched film applied in a circumferential binding pattern around the circumferential side face of the bale, and
- the wrapping comprises:
- first and second edge wrappings that comprise respectively first and second strips of stretched film applied in edge wrapping patterns to the first and second edge regions, wherein:
- each of the first and second edge wrappings comprises a side portion that covers an end part of the circumferential side face and a face portion that covers an outer part of a respective one of the first and second end faces,
- the side portion of each of the first and second edge wrappings partially overlaps a respective edge portion of the binding, and
- the side portions of the first and second edge wrappings are separated from one another and do not overlap a central portion of the binding, and
- a first longitudinal wrapping that fully covers the bale surface and comprises at least one strip of stretched film applied to the bale surface in a longitudinal wrapping pattern that passes over the first and second end faces and the circumferential side face.

Optionally, the wrapped bale further comprises a second longitudinal wrapping.

In an embodiment, the bale wrapper comprises a bale support configured to rotate a bale about an axis of the bale, a film dispenser, and drive means for driving relative rotation between the film dispenser and the bale support,

Certain embodiments of the present invention will now be described by way of example with reference to the accompanying drawings, wherein:
Figures 1A and 1B are schematic side-sectional and end views of a bale that has been wrapped according to a first wrapping procedure as described in WO01/176368A;
Figure 2 is an isometric view of a combined baler-wrapper and a bale that is wrapped by the combined baler-wrapper;
Figures 3.1-3.7 illustrate a user interface of a combined baler-wrapper;
Figure 4 is a schematic view of the control system for controlling operation of the baler-wrapper;
Figure 5 is an isometric view of a bale wrapper that comprises part of the combined baler-wrapper, in a longitudinal wrapping configuration;
Figure 6 is an isometric view of the bale wrapper in an edge wrapping configuration;
Figure 7 is a top view of the bale wrapper in an edge wrapping configuration;
Figure 8 is an isometric view of the bale wrapper in a first intermediate position between the edge wrapping configuration and the longitudinal wrapping configuration;
Figure 9 is an isometric view of the bale wrapper in a second intermediate position between the edge wrapping configuration and the longitudinal wrapping configuration;
Figure 10 is an isometric view of the bale wrapper in a circumferential wrapping configuration;
Figures 11A and 11B are schematic side-sectional and end views of a bale that has been wrapped according to a first wrapping procedure as described herein, and
Figures 12A and 12B are schematic side-sectional and end views of a bale that has been wrapped according to a second wrapping procedure as described herein.

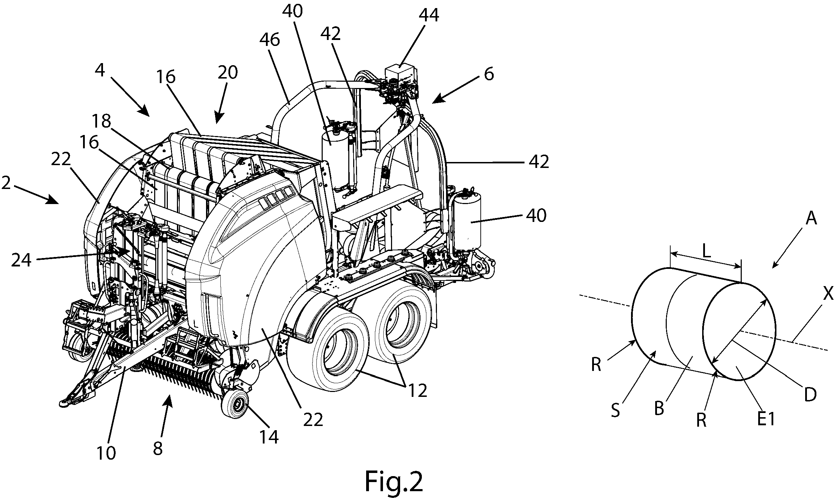

Figure 2 illustrates the main components of a combined baler-wrapper 2 according to an embodiment of the invention. In this embodiment the baler-wrapper 2 includes a front section comprising a baler 4 where a bale is formed from bale material, and a rear section comprising a wrapper 6 where the bale is wrapped with a stretch plastic film wrapping material.

It should be noted that the invention is also applicable to bale wrappers that do not include an integrated baler. In that case, bales formed by a separate baler may be wrapped subsequently using the bale wrapper.

It should also be noted that the baler 4 and the wrapper 6 may take alternative forms, as are known in the art. For example, the baler may be variable baling chamber type or a fixed baling chamber type, both of which are well known to persons skilled in the art. The wrapper 6 illustrated in the drawings is of an orbital satellite type. Alternatively, the wrapper may be of a turntable type or any other type. Again, various types of wrapper are well known to persons skilled in the art.

The baler-wrapper 2, which in this embodiment is of the variable chamber type baler 4, includes a pick-up device 8 for picking up bale material, for example cut straw or grass, from the ground, a drawbar 10 for attaching the baler-wrapper to a tractor, support wheels 12, 14 and a plurality of press elements comprising elongate belts 16 that are guided around a set of rollers 18. The belts 16 together with a pair of side plates (not shown) create a cylindrical baling chamber 20 in which a round bale can be formed. The pick-up device 8 is configured to feed the bale material into the baling chamber 20. The sides of the baler 4 are covered by covers 22. The baler-wrapper 2 may be driven, for example, via the power take off (PTO) of the tractor. These components are conventional and will not be further described. Although the baler 4 in this embodiment is of the variable chamber type, it is to be understood that the invention also is applicable to baler-wrappers with alternative types of baler including for example fixed chamber balers.

The baler 4 is configured to make a cylindrical or "round" bale A having a longitudinal axis X, a length L and a diameter D. The bale A has a bale surface comprising first and second circular end faces E, a cylindrical circumferential side face S and first and second edge regions R where the circumferential side face S meets the first and second end faces E respectively.

The baler 4 includes a binder 24 that is configured to apply a film binding material comprising stretch plastic film to the circumferential side face S of the bale to form a binding, and a conventional cutter device (not shown) that is configured to cut the film after the bale has been bound.

The binder 24 is configured to bind the bale in the baling chamber 20 by passing at least one strip of stretched plastic film in a circumferential binding pattern around the circumferential side face S of the bale. The stretched film forms a binding B that holds the crop material in compression. The stretched plastic film is typically wound two, three, four or more times around the circumferential side face S to form the binding B. The width of the binding is approximately equal to the length L of the bale so that it covers substantially the entire circumferential side face S.

The binder 24 may for example be similar to the binder described in PCT/EP2021/060808, which includes a supply device for a supply of film binding material. The supply device may comprise two reels of film binding material, each reel being mounted on a separate support. The supports may optionally be mounted on pivots that allow the supports to pivot through 90 degrees from a vertical bundling position to a horizontal binding position. An actuator may be provided to drive rotation of the supports. Alternatively, the reels may be mounted on fixed horizontal supports that cannot be rotated.

The binder 24 may include a pre-stretcher device that stretches the film binding material as it is drawn from the reel. The pre-stretcher device may be of a conventional kind, for example comprising two rollers that are driven at different circumferential speeds to stretch the film binding material lengthwise as it passes around the two rollers.

The baler 4 may also include a reel of net binding material, which can be used as an alternative to film binding material if the use of net binding material is preferred for operational reasons. The provision of a net binding system is optional.

During binding of a bale, the bale B is rotated within the baling chamber 20 by the press elements, which may include belts 16 and/or rollers 18. The film binding material is drawn from the binder 24 by rotation of the bale B and wound around the circumference of the bale. Typically, the film is wound two, three or four times around the bale A to form the binding B.

During binding the film binding material is spread to its full width as it is applied to the circumferential side face S of the bale A. Optionally, two or more strips of film binding material may be applied side by side to cover the full width of the circumferential side face S, which is equal to the length L of the bale. If two or more strips of film binding material are applied they may be overlapped to form a continuous binding strip.

Once binding of the bale has been completed the film binding material is cut and the bound bale A is ejected from the baling chamber 20 and transferred to the wrapper 6 so that an air-tight wrapping W can be applied. Alternatively, the baler-wrapper 2 may be configured to the wrap the bale at least partially in the bale chamber 20, which is opened after binding of the bale has been completed.

The wrapper 6 includes a bale support assembly 32 (or "table") for supporting the bale A and rotating it about the longitudinal axis X of the bale. In this embodiment the bale support assembly 32 includes a pair of rollers 34 and a set of belts 36 that extend around the rollers. Hydraulic or electric drive motors (not shown) may be provided for driving rotation of the rollers 34 and belts 36, thereby causing the bale A to rotate about its longitudinal axis X. A pair of freely rotatable guide rollers 38 may be provided, which engage the end faces E of the bale to prevent longitudinal movement of the bale in the direction of the axis X.

In this embodiment the wrapper 6 includes a pair of film dispensers 40 for dispensing wrapping film onto the surface of a bale. Alternatively, a single film dispenser may be provided. Each film dispenser 40 is mounted on the end of a wrapper arm 42 that is rotatably attached to a wrapper arm drive mechanism 44 mounted above the bale support assembly 32 on a support structure 46. The wrapper arm drive mechanism 44 may for example include a hydraulic motor. Each film dispenser 40 may include a support for a roll 48 of stretch plastic film F and a pre-stretching mechanism 50 for pre-stretching the film F as it is drawn from the roll 48, before it is applied to the bale A.

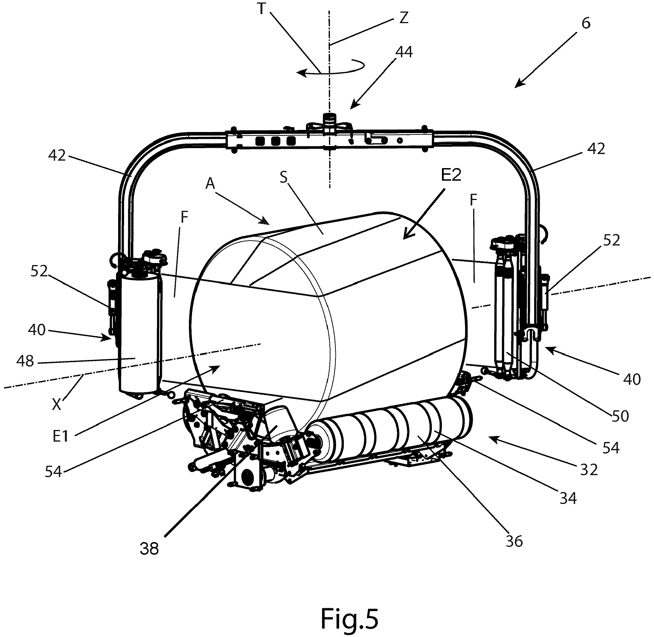

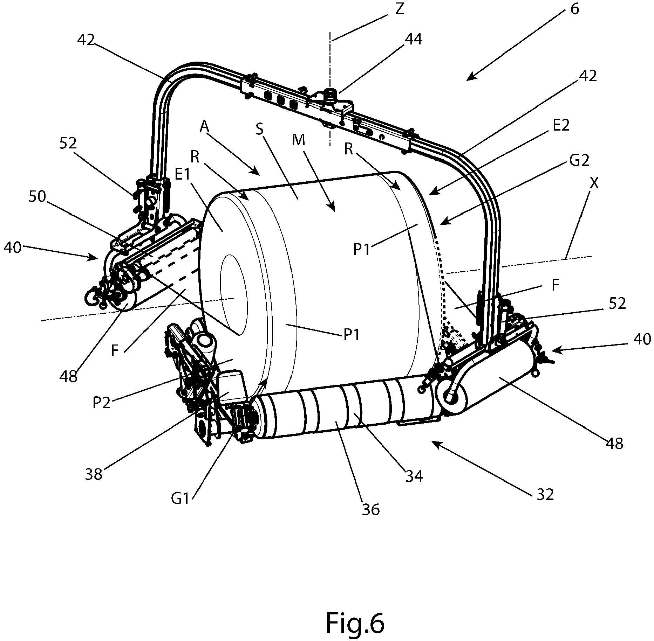

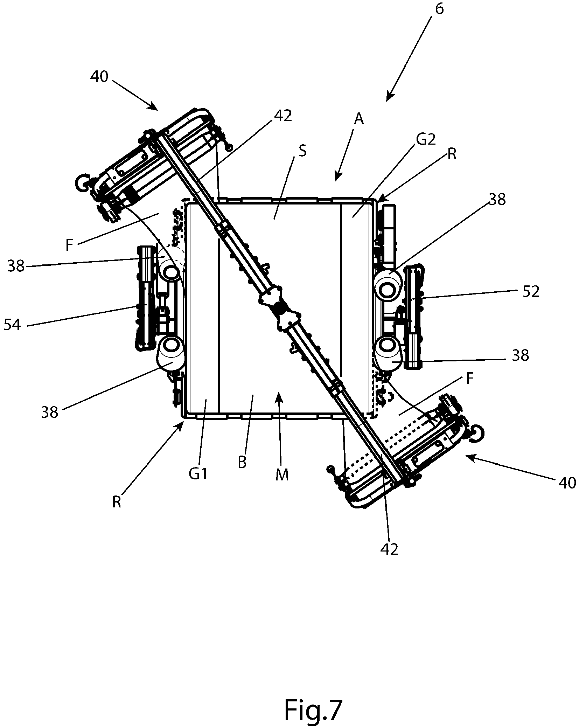

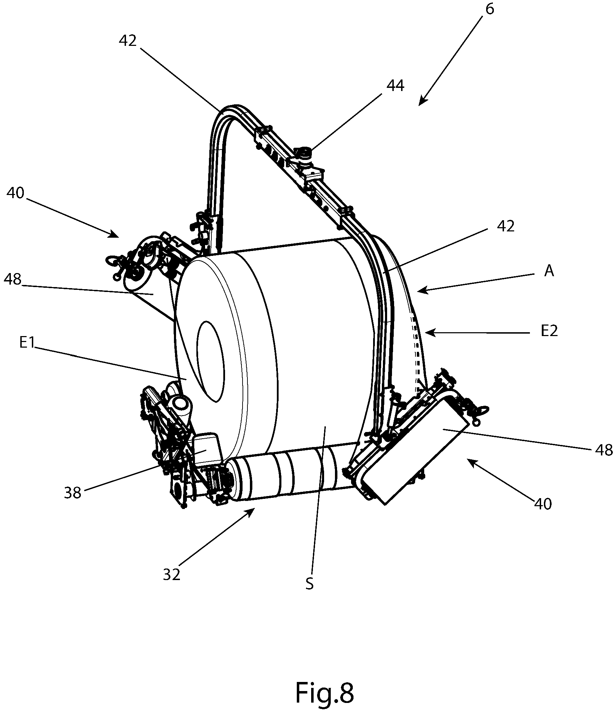

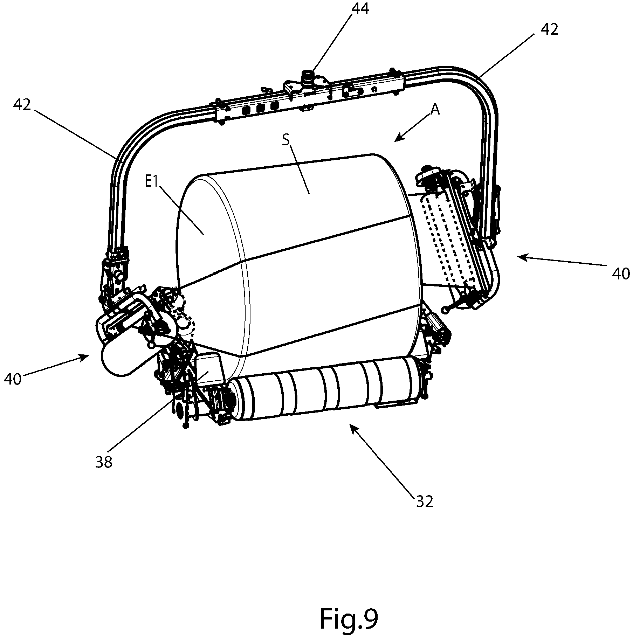

Each film dispenser 40 is mounted on the end of the respective wrapper arm 42 by a pivot mechanism that allows the film dispenser 40 to rotate about a substantially horizontal axis between a vertical position as illustrated in figures 2 & 5 and a horizontal position as shown in figures 6 & 7. Figures 8 & 9 show the film dispensers 40 in first and second intermediate positions between the horizontal and vertical positions. A pivot drive mechanism 52, for example a hydraulic actuator, is provided for controlling movement of the film dispensers 40 between the horizontal and vertical positions.

The film dispenser 40 and pre-stretching mechanism 50 may be conventional and may for example be substantially as described in EP2156728B1.

The bale wrapper 6 may also include a pair of film cutters 54 for cutting the film F after it has been applied to the bale A. The structure and operation of the film cutters 54 may be conventional and may for example be substantially as described in EP2798946B1.

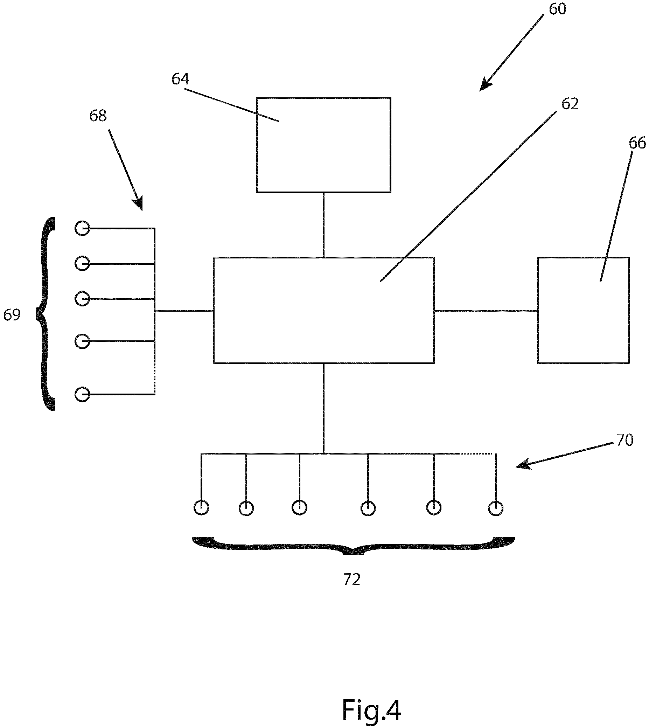

A control system 60 for controlling operation of the baler-wrapper is illustrated in figure 4. The control system 60 comprises a controller 62, for example an electronic control unit, an operator input unit 64 that enables an operator to input various desired characteristics of the bale, a display unit 66, a plurality of inputs 68 for receiving analogue or digital input signals from various sensors 69, and a plurality of outputs 70 for sending control signals to different control components 72 of the baler-wrapper, for example actuators, hydraulic control valves and so on. The inputs 68 may for example be configured to receive input signals from sensors 69 associated with one or more of: the crop pick-up device 8, the baling chamber 20, the bale binder 24, the bale wrapper 6, the film dispensers 40, the film cutters and so on. The outputs 70 may for example be configured to send control signals to drive devices associated with one or more of: the crop pick-up device 8, the baler 4, the bale binder 24, the bale wrapper 6, the bale support assembly 32, the wrapper arm drive 44, the film dispensers 40, the pre-stretching mechanism 50, the film cutters 54 and so on. The control system 60 may for example be configured as a CAN bus system.

The operator input unit 64 and the display unit 66 may be combined into an operator interface device, for example with a touch screen that includes numerous "soft keys" for controlling operation of the baler-wrapper 2.

The controller 62 is configured to control operation of the wrapper 6 to wrap a bale A as described herein, optionally according to operator input signals received from the operator input device 64. The controller 62 may also be configured to control operation of the baler 4 and the binder 24. Operating parameters of the control system showing operation of the baler-wrapper may be displayed to the operator via the operator display device 66.

An example of a user interface 80 of a combined baler-wrapper is illustrated in Figures 3.1-3.7. In this example the user interface 80 comprises a touch screen 82 (or "workscreen") that can be configured both for selecting operator parameters and illustrating selected operating parameters of the baler-wrapper. Alternatively, separate operator input and display units may be provided.

The touch screen 82 may comprise a plurality of different areas that may be configured either as input areas 84 (e.g. "soft keys") that receive operator inputs, or display areas 86 that display selected operating parameters, or combined input/display areas. The input areas 84 can also function as display areas to display the input values selected by the operator.

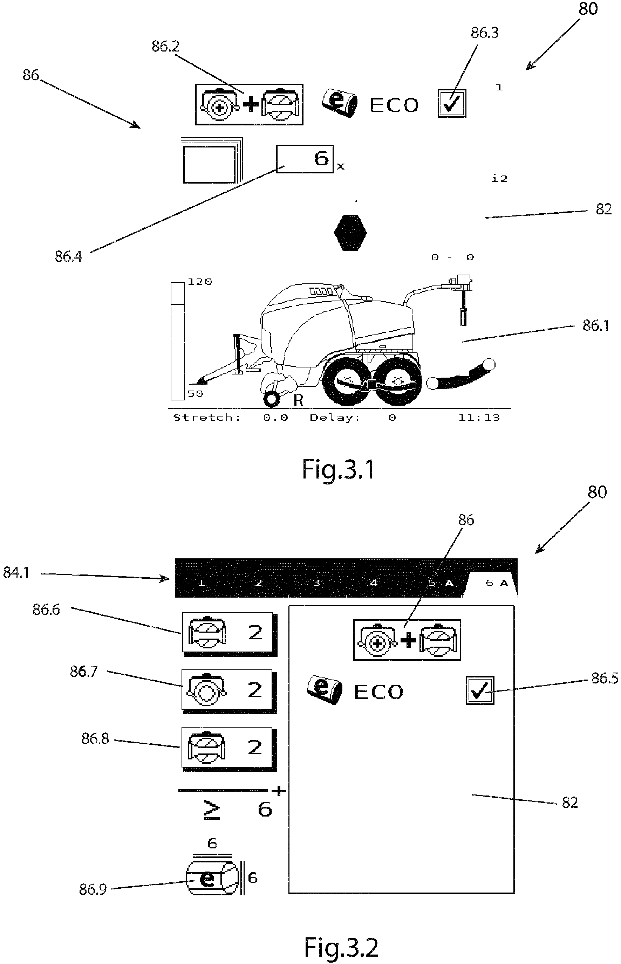

Figure 3.1 illustrates a typical user interface 80, which has various display areas, including a machine display 86.1, a wrapping pattern display 86.2, an Eco-mode display 86.3 and a wrapping layers display 86.4.

The method of wrapping and the number of wrappings can be selected by tapping the wrapping display 86.2 and then inputting the required values, for example by selecting from a drop-down list, moving a cursor over a set of displayed values, or by tapping increase and decrease soft keys one or more times. In the example illustrated in Figure 3.1 it can be seen that circumferential and longitudinal wrapping patterns have been selected. The wrapping display 86.4 shows the selected number of wrapping layers (in this example, six layers).

The eco-mode display area 86.3 shows whether or not an eco-mode wrapping procedure has been selected. In this example, the tick shows that an eco-mode wrapping procedure has been selected. The term "eco-mode" refers to the fact that a wrapping procedure according to the invention has been selected, wherein the bale is bound by passing at least one strip of stretched film in a circumferential binding pattern around the circumferential side face of the bale, and subsequently applying first and second strips of stretched film in edge wrapping patterns to the first and second edge regions of the bale to form first and second edge wrappings.

This wrapping procedure reduces the total amount of film needed to the wrap the bale, with the result that it is more environmentally friendly.

It may be possible to store a number of pre-set binding and wrapping programs in the control system 60. As depicted in Fig. 3.2, these pre-set programs may be shown in the user interface 80 under a number of selectable tabs 84.1. In the illustrated example tab 6A is selected, which in this case is an eco-mode binding and wrapping program, as indicated by the tick in the eco-mode display area 86.5.

On the left-hand side of the touch screen 82 there are three wrapping display areas 86.6, 86.7, 86.8 showing the number of layers of film applied to the bale during different stages of the wrapping process. In the example shown in Fig. 3.2 the first wrapping display area 86.6 shows that two layers of film are applied in a longitudinal wrapping pattern to form the first (innermost) wrapping, the second display area 86.7 shows that two layers are applied in a circumferential edge wrapping pattern to form the second wrapping, and the third display area 86.8 shows that two layers are applied in a final longitudinal wrapping pattern.

The wrapped bale has at least six wrapping layers of film on the circumferential side face and at least six wrapping layers on each of the end faces, as indicated schematically in wrapping pattern display area 86.9. The letter "e" on the bale logo in display area 86.9 confirms that eco-mode is selected, in which the bale is bound with at least one (in this case two) layers of plastic film applied to the circumferential side face of the bale.

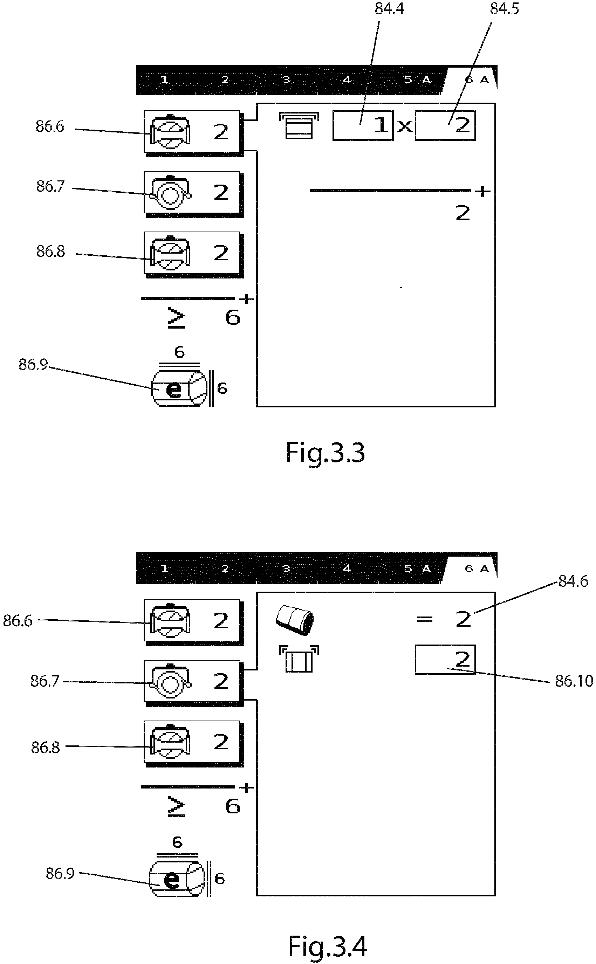

More information about each of the different wrappings can be displayed by tapping each of the first, second and third wrapping display areas 86.6, 86.7, 86.8. For example, as illustrated in Fig. 3.3, tapping the first wrapping display area 86.6 shows that the first longitudinal wrapping comprises two layers of film, which are applied during a half rotation of the bale around its axis. This is achieved by supplying film from two film dispensers and providing a 50% overlap between successive strips of film wrapping material, producing a wrapping that has a thickness of two layers of film on the circumferential side face of the bale. In a similar manner, tapping the second and third wrapping display areas 86.7, 86.8 will provide more information about the circumferential edge wrapping pattern and the final longitudinal wrapping pattern.

It is also possible to adjust the settings in each of these windows. For example, by tapping the first input window 84.4 the number of half rotations of the bale during the wrapping process can be selected and adjusted (where each half rotation provides a two layer wrapping pattern), and by tapping the second input window 84.5 the number of layers of film applied during each half rotation of the bale can be selected and adjusted. The number of layers of film applied during each half rotation of the bale is related to the overlap setting of the strips of film applied to the bale. For example, three layers of film can be applied during each half rotation of the bale by providing an overlap setting of 67%.

As illustrated in Fig. 3.4, tapping the second wrapping display area 86.7 causes the user interface to display more information about the circumferential edge wrapping applied by the wrapper. In this example, the number of film binding layers (two) applied in the baler is shown in a display window 84.6 and the selected number of circumferential edge wrapping layers (two) is shown in an input window 86.10. The number of circumferential edge wrapping layers can be adjusted by tapping the input window 86.10 and entering the desired number. Because the circumferential face of the bale has already been covered with two layers of film in the baler to form the binding, the wrapper only applies 2 layers of film in the circumferential edge wrappings. The edge wrapping covers the outer parts of the end faces of the bale to ensure that the end faces are fully covered with a desired number of layers of film once the longitudinal wrapping has been applied. The wrapping pattern display area 86.9 shows that the wrapped bale has at least six wrapping layers on the circumferential side face and at least six wrapping layers on each of the end faces. The letter "e" on the bale logo in area 86.9 confirms that eco-mode is selected,

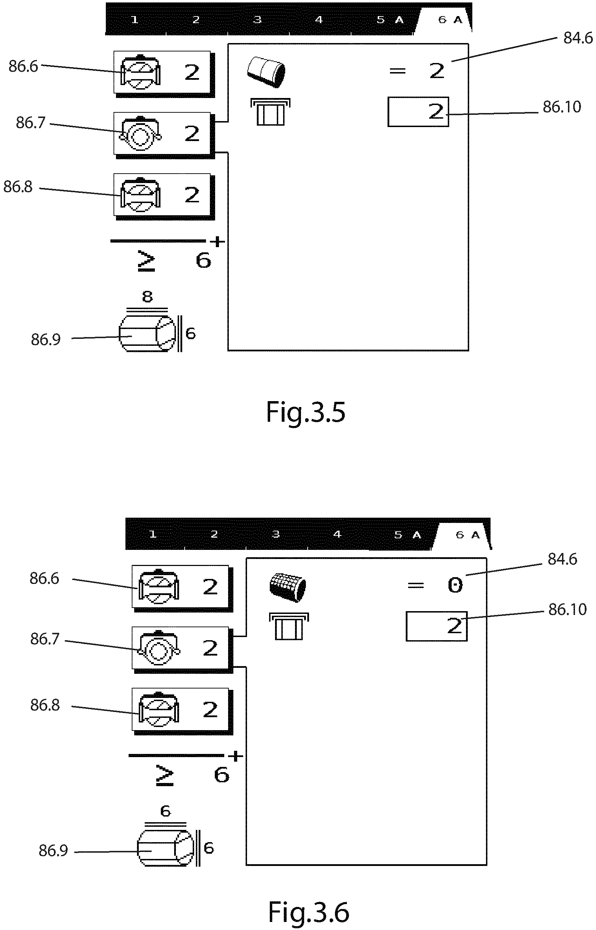

Fig. 3.5 illustrates a similar display window when eco-mode is not selected. Tapping the second wrapping display area 86.7 again causes the user interface to display more information about the circumferential wrapping pattern. In this example, the number of film binding layers (two) is shown in a display window 84.6 and the selected number of circumferential wrapping layers (two) applied by the wrapper is shown in an input window 86.10. The wrapping pattern display area 86.9 shows that the wrapped bale has at least eight wrapping layers on the circumferential side face (because eco-mode is not selected) and at least six wrapping layers on each of the end faces. The letter "e" is not displayed on the bale logo in display area 86.9, which confirms that eco-mode is not selected,

Fig. 3.6 illustrates a similar display window when net binding material is used to bind the bale. The net binding does not provide a wrapping function and therefore in this case zero ("0") is shown in display window 84.6, indicating that the binding provides no wrapping layers. The icon to the left of the display window 84.6 depicts the net binding applied to the bale. The selected number of circumferential wrapping layers (two) is shown in input window 86.10. The wrapping pattern display area 86.9 shows that the wrapped bale has at least six wrapping layers on the circumferential side face (including any edge wrappings and any connecting circumferential wrappings) and at least six wrapping layers on each of the end faces. The letter "e" is not displayed on the bale logo in display area 86.9 as eco-mode cannot be selected when net binding material is used.

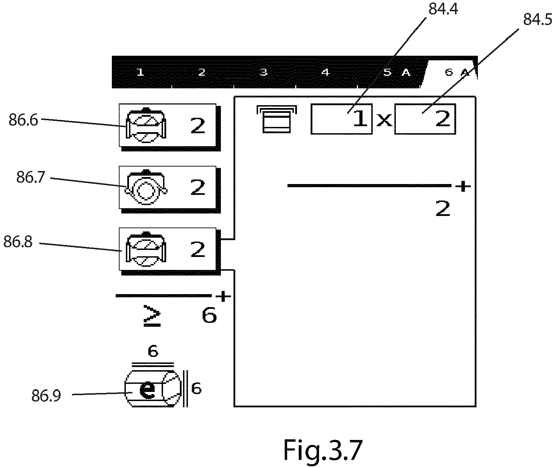

As illustrated in Fig. 3.7, tapping the third wrapping display area 86.8 causes the user interface to display more information about the outer longitudinal wrapping pattern. In this example the outer longitudinal wrapping comprises two layers of film, which are applied during a half rotation of the bale around its axis. The number of half rotations of the bale during the wrapping process can be selected and adjusted by tapping the first input window 84.4, and the number of layers of film applied during each half rotation of the bale can be selected and adjusted by tapping the second input window 84.5. The wrapping pattern display area 86.9 shows that the wrapped bale has at least six wrapping layers on the circumferential side face and at least six wrapping layers on each of the end faces. The letter "e" on the bale logo in area 86.9 confirms that eco-mode is selected.

A procedure for binding and wrapping a bale in the baler-wrapper 2 will now be described.

First, a bale is made in the baling chamber in a conventional manner by feeding crop material into the baling chamber and rotating and compressing the crop material within the baling chamber until the bale is formed. The bale is then bound as described above by drawing stretch plastic film binding material into the baling chamber and winding the binding material around the circumference of the bale. Typically, the film is wound two, three or four times around the bale A to form a circumferential binding B.

The bale A is then transferred to the wrapper 6 for the wrapping process. The wrapper 6 is capable of providing various wrapping patterns including a longitudinal wrapping pattern, an edge wrapping pattern and optionally a circumferential wrapping pattern.

Figure 5 is an isometric view of the bale wrapper 6 in a longitudinal wrapping configuration. To form the longitudinal wrapping L the wrapping arms 42 are rotated in a direction T about the axis Z of the drive mechanism 44 while the bale A is rotated about its longitudinal axis X on the support assembly 32, the rotation rate of the wrapper arms 42 around the drive axis Z being several times faster than the rotation rate of the bale A about its axis X. Film binding material F is thus wound from the film dispensers 40 onto the bale surface in an end-over-end fashion so that it passes sequentially over the first end face E1, the circumferential side face S, the second end face E2, again the circumferential side face S, and so on. The bale A is rotated about its longitudinal axis X as the binding material is applied so that the strips of film binding material placed on the circumferential side face S overlap one another, usually by approximately 50% of the width of the film binding material. As a result, a double thickness of film binding material is applied to the circumferential side face S. The strips of film binding material placed on the circumferential side face S extend approximately in the longitudinal direction of the bale but are inclined relative to the longitudinal axis X owing to the rotation of the bale as the film binding material is applied.

Figures 6 and 7 show the bale wrapper 6 in an edge wrapping configuration. To form the first and second edge wrappings G1, G2 the wrapping arms 42 are locked in a stationary position with the film dispensers 40 located adjacent opposite corners of the bale A. The film dispensers 40 are also pivoted from the vertical position shown in figure 5 to horizontal positions. The bale A is rotated about its longitudinal axis X on the support assembly 32 and film binding material F is wound from the film dispensers 40 onto the edge regions R of the bale to form the first and second edge wrappings G1, G2. Each of the edge wrappings G1, G2 includes a side portion P1 that covers an end part of the circumferential side face S and a face portion P2 that covers a radially outer part of a respective one of the first and second end faces E1, E2. The guide rollers 38 help to press the face portions P2 of the edge wrappings G1, G2 onto the end faces E1, E2 of the bale A.

The side portion P1 of each of the first and second edge wrappings G1, G2 partially overlaps a respective edge portion of the binding B, which extends over the full length of the bale A. The side portions P1 of the first and second edge wrappings G1, G2 are separated from one another and do not overlap a central portion M of the binding B.

Figures 8 and 9 show the bale wrapper 6 in first and second intermediate positions between the longitudinal wrapping configuration and the edge wrapping configuration. The film dispensers 40 are shown pivoting from the vertical position shown in figure 5 to the horizontal position shown in figures 6 & 7.

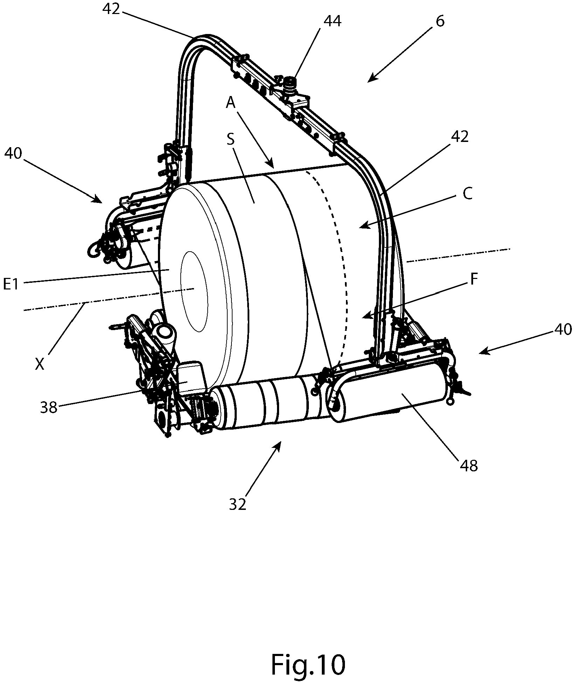

Figure 10 shows the bale wrapper 6 in a circumferential wrapping configuration, to form a central circumferential wrapping C. The provision of a central circumferential wrapping is optional but may be desired for example to add extra strength to the wrapping around the circumferential side face S of the bale, or to increase the pressure exerted on the bale by the wrapping.

To form a central circumferential wrapping C the wrapping arms 42 are locked in a stationary position with the film dispensers 40 located adjacent the side face S of the bale A. The film dispensers 40 are locked in the horizontal positions. The bale A is rotated about its longitudinal axis X on the support assembly 32 and film binding material F is wound from the film dispensers 40 onto the circumferential side face S of the bale to form first and second circumferential wrapping strips, which overlap one another in the central region of the side face S to form the central circumferential wrapping C.

The central circumferential wrapping C overlaps the side portions of the edge wrappings. It therefore connects the edge wrappings together to form an air-tight wrapping layer that extends over the side face S of the bale. The central circumferential wrapping C is also referred to herein as a cylindrical connecting wrap. In embodiments of the invention, the bale wrapping (not include the binding) either (a) does not include a central circumferential wrapping that overlaps the side portions of the first and second edge wrappings, or (b) it includes a central circumferential wrapping that overlaps the side portions of the first and second edge wrappings, and the number of layers of film in the central circumferential wrapping is less than the number of layers of film in the first and second edge wrappings.

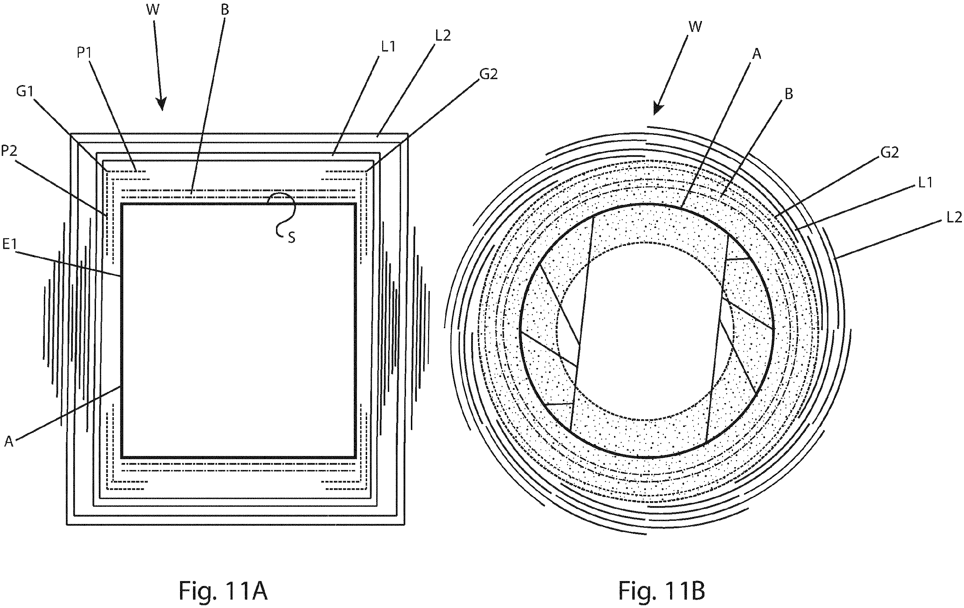

A first wrapping pattern according to the present invention is illustrated schematically in Figs. 11A and 11B, wherein figure 11A is a side-sectional view of a bale A that has been wrapped according to a first wrapping procedure and figure 11B is an end view of the bale.

In this embodiment the bale A is bound by a binding B comprising two layers of plastic film material wound circumferentially onto the side face S of the bale. Three, four or more layers of film may alternatively be used. The binding B substantially covers the circumferential side face S of the bale and extends to both ends of the bale.

Two edge wrappings E1, E2 are applied to the edge regions R of the bale. In this embodiment each of the edge wrappings comprises two layers of plastic film, which are wound circumferentially onto the edge regions of the bale A. Alternatively, each of the edge wrappings may comprise more or fewer than two layers of plastic film. Each edge wrapping comprises a side portion P1 that covers an end part of the circumferential side face S and a face portion P2 that covers a radially outer part of the respective end face E. The side portion P1 of each edge wrapping partially overlaps a respective edge portion of the binding B. It should be noted that the side portions P1 of the first and second edge wrappings E1, E2 are separated from one another and do not overlap a central portion M of the binding B.

First and second longitudinal wrappings L1, L2 are applied on top of the binding B and the edge wrappings E1, E2. In this embodiment, each of the longitudinal wrappings provides two layers of plastic film material on the circumferential side face S of the bale and more than two layers on the end faces E of the bale, where the strips of film material overlap one another many times. The layers of plastic film material on the circumferential side face S of the bale overlap one another by approximately 50% of the width of each strip as illustrated in figure 11A to form an airtight wrapping that covers the entire bale surface.

The binding and wrapping layers in the first wrapping pattern follow the sequence B, E1/E2, L1, L2 working from the bale surface outwards, with the binding B forming an innermost layer of the finished binding/wrapping structure, followed by the edge wrappings E1/E2 and then the first and second longitudinal wrappings L1, L2 with the second longitudinal wrapping L2 forming the outermost layer of the binding/wrapping structure.

It should be noted that in this embodiment the entire bale surface is covered by at least six layers of plastic film material in total. For example, in the central portion M of the side face S the bale surface is covered by two layers of film in the binding B and four layers of film in the first and second longitudinal wrappings L1, L2. In each edge region R the circumferential side face S of the bale surface is covered by three layers of film in the binding B, two layers of film in the respective edge wrapping E1, E2 and four layers of film in the first and second longitudinal wrappings L1, L2. Also, in each edge region R the radially outer part of the end face E is covered by two layers of film material in the respective edge wrapping E1, E2 and four layers of film material in the first and second longitudinal wrappings L1, L2. The radially inner part of the end face E is covered by between six and twelve layers of film material in the first and second longitudinal wrappings L1, L2, owing to the way the strips of plastic film overlap one another on the end faces E of the bale.

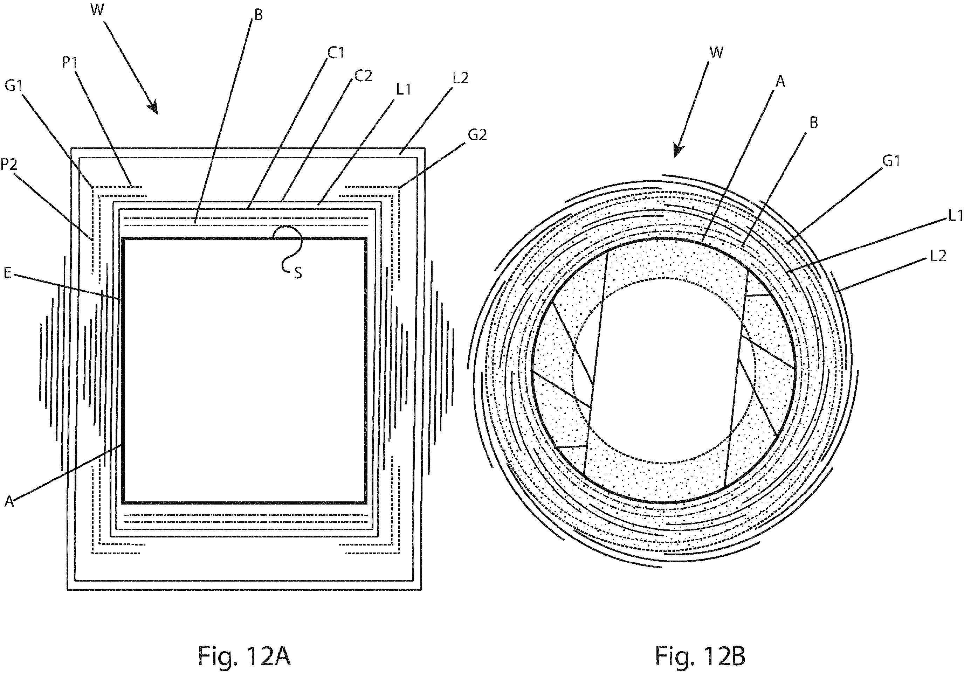

A second wrapping pattern according to the present invention is illustrated schematically in Figs. 12A and 12B, wherein figure 12A is a side-sectional view of a bale A that has been wrapped according to a second wrapping procedure and figure 12B is an end view of the bale. The second wrapping pattern is similar to the first wrapping pattern described above, except that the edge wrappings E1, E2, are located between the first and second longitudinal wrappings L1, L2 rather than below both longitudinal wrappings L1, L2. The binding and wrapping layers in the first wrapping pattern therefore follow the sequence B, L1, E1/E2, L2 working from the bale surface outwards, with the binding B forming an innermost layer of the finished binding/wrapping structure, followed by the first longitudinal wrapping L1,then the edge wrappings E1/E2 and finally the second longitudinal wrapping L2 so that the second longitudinal wrapping L2 forms the outermost layer of the binding/wrapping structure. In other respects, the second binding/wrapping structure is similar to the first binding/wrapping structure described above.

As an example, an operating procedure for the wrap program of the baler-wrapper will not be described. It should be understood this is only one example of a wrapping procedure and that the steps described below may be varied according to the various requirements of the wrapped bale, including the total number of wrapping layers required and the combination of different wrappings chosen.

The steps described below include operator steps, where certain parameters of the wrapping process are selected by the operator and entered via the operator input unit 64, and automatic steps that are controlled by the controller 62 based on the operator input.

The operator steps may include:
- Enter a preset number of film wrapping layers (*e.g.6*)
- Enter a preset number of film binding wraps (*e.g. 2*)
- Enter a selected method of bale binding from net binding or film binding (*e.g. film binding*)
- Start the baling process and the binding process
- Transfer the bale to the wrapping position upon completion of the baling process

The automatic steps of the wrapping process that are controlled by the controller 62 may include:
- Check the (minimum) number of layers with which the bale needs to be wrapped.
   ∘ **SetNrWrappingLayers** (*e.g. 6*)
- Check the actual number of binding layers on the bale to be wrapped:
   ∘ **NrBindingLayers** (*e.g. 2*)
- Wrap the bale with one longitudinal wrapping cycle;
   ∘ E.g. **2** layers; 50% overlap, half a turn over the main axis
- Calculate the number of edge wraps:
   ∘ **NrOfEdgeWraps = SetNrWrappingLayers** - **4 (e.g. 6-4=2)**
- Apply the calculated number of edge wraps.
- Calculate the number of cylindrical wraps between the edge wraps:
   ∘ **NrOfCylindricalConnectingWraps = SetNrWrappingLayers** - **NrBindingLayers - 4 (e.g. 6-2-4=0)**
- **If the NrOfCylindricalConnectingWraps > 0**
   ∘ Apply the cylindricalConnectingWraps.
- Finish the bale wrapping with one longitudinal wrapping cycle.
   ∘ E.g. **2** layers; 50% overlap, half a turn over the main axis)

The wrapping procedures described above are applicable to combined baler-wrapper machines that are configured to bind a bale with plastic film material and then wrap the bale, and also to bale wrappers that are configured to wrap bales which have been made by a separate baler and bound with plastic film material. These wrapping procedures provide the advantage that the quantity of film required to produce an airtight wrapping with a predetermined minimum number of layers of plastic film is substantially reduced as compared to the wrapping procedure illustrated in figures 1A & 1B. These advantages result from the use of film binding material to bind the bale and the provision of edge wrappings that overlap the binding and extend onto the end faces of the bale. This avoids the need for a full circumferential wrap that covers the entire side face of the bale, since the binding also helps to form the air-tight seal around the bale.

Optionally, if required, a central circumferential wrap may also be applied in addition to the longitudinal and edge wrappings, for example to provide additional protection against puncturing of the wrapping, or to achieve a predetermined number of layers of wrapping material over the whole surface of the bale. For example, if a total of eight wrapping layers are required this may be achieved by providing three binding layers, two longitudinal wrapping layers, four edge wrapping layers and one central circumferential wrapping layer. In the resulting wrapping the edges of the bale are covered by four layers of film from the two longitudinal wrapping layers and four edge wrapping layers, while the circumferential side face is covered by three binding layers, one central circumferential wrapping layer and four layers of film from the two longitudinal wrapping layers.

In some embodiments, the baler-wrapper or bale wrapper may optionally be configured to wrap bales that have been bound with net binding material, in addition to bales that have been bound with plastic film material. In the case of bales bound with net binding material the advantages described above will not apply as the net binding does not help to form an air-tight seal around the bale. Therefore, in this case a central circumferential wrap may also be applied, in addition to the longitudinal and (optionally) the edge wrappings, to seal the bale. Therefore, this modification increases the versatility of the baler-wrapper or bale wrapper and allows it to be used when a net binding material is preferred.

## Claims

1. A bale wrapper for wrapping a bale having a bale surface comprising first and second end faces, a circumferential side face, first and second edge regions where the circumferential side face meets the first and second end faces respectively, and a binding comprising at least one layer of stretched film applied in a circumferential binding pattern around the circumferential side face of the bale,
wherein the bale wrapper comprises a controller that controls operation of the bale wrapper, wherein the bale wrapper is configured to wrap the bale by:
• applying first and second strips of stretched film in edge wrapping patterns to the first and second edge regions respectively to form first and second edge wrappings, such that:
• each of the first and second edge wrappings comprises a side portion that covers an end part of the circumferential side face and a face portion that covers an outer part of a respective one of the first and second end faces,
• the side portion of each of the first and second edge wrappings partially overlaps a respective edge portion of the binding, and
• the side portions of the first and second edge wrappings are separated from one another and do not overlap a central portion of the binding, and
• applying at least one strip of stretched film to the bale surface in a longitudinal wrapping pattern that passes over the first and second end faces and the circumferential side face to form a longitudinal wrapping that fully covers the bale surface
• wherein the bale wrapping, which does not include the binding, either:
• (a) does not include a central circumferential wrapping that overlaps the side portions of the first and second edge wrappings, or
• (b) includes a central circumferential wrapping that overlaps the side portions of the first and second edge wrappings, and the number of layers of film in the central circumferential wrapping is less than the number of layers of film in the first and second edge wrappings.

2. A bale wrapper according to claim 1, wherein the controller is configured to control operation of the wrapper such that the number of layers of film in the central circumferential wrapping is determined by the controller according to the number of layers of stretched film that form the binding.

3. A bale wrapper according to claim 1 or claim 2, wherein the controller is configured to control operation of the wrapper such that the number of layers of stretched film applied to the edge regions of the bale surface to form the first and second edge wrappings, and/or the number of layers of stretched film applied to the bale surface in a longitudinal wrapping pattern to form the longitudinal wrapping, is determined by the controller according to the number of layers of stretched film that form the binding.

4. A bale wrapper according to any preceding claim, wherein the controller is configured to control operation of the wrapper to apply a predetermined minimum number of layers of stretched film to the bale surface, the predetermined minimum number of layers of stretched film comprising the binding, the first and second edge wrappings and the longitudinal wrapping.

5. A bale wrapper according to claim 4, wherein the controller is configured to:
• control operation of the wrapper to apply a predetermined minimum number of layers of stretched film to the entire bale surface and/or to selected locations on the bale surface, and/or
• control operation of the wrapper while forming the first and second edge wrappings to apply a predetermined number of layers of stretched film in each of the first and second edge wrappings, and/or
• control operation of the wrapper while forming the longitudinal wrapping to apply a predetermined number of layers of stretched film to the circumferential face of the bale in the longitudinal wrapping.

6. A bale wrapper according to claim 5, wherein the controller includes:
• an operator input device enabling an operator to select a predetermined minimum number of layers of stretched film to be applied to the bale surface, and/or
• an operator display device configured to display the number of layers of stretched film to be applied to the bale surface.

7. A bale wrapper according to any preceding claim, wherein the first and second edge wrappings are applied to the bale before the longitudinal wrapping, so that the first and second edge wrappings are located between the binding and the longitudinal wrapping.

8. A bale wrapper according to any preceding claim, wherein the longitudinal wrapping comprises a first longitudinal wrapping and a second longitudinal wrapping, and optionally wherein either:
• the first longitudinal wrapping is applied to the bale before the first and second edge wrappings, so that the first longitudinal wrapping is located between the binding and the first and second edge wrappings, and the second longitudinal wrapping is applied to the bale after the first and second edge wrappings, or
• the first and second longitudinal wrappings are applied to the bale after the first and second edge wrappings.

9. A bale wrapper according to any one of the preceding claims, wherein the bale wrapper is additionally configured to provide an alternative mode of operation in which the bale is bound with net binding material, and optionally wherein the controller is configured to control operation of the wrapper to apply at least one strip of stretched film in a circumferential binding pattern around the circumferential side face to form a circumferential wrapping that covers the net binding material.

10. A baler-wrapper for making, binding and wrapping a bale having a bale surface comprising first and second end faces, a circumferential side face and first and second edge regions where the circumferential side face meets the first and second end faces respectively, the baler-wrapper comprising:
• a baler having a baling chamber in which the bale is made,
• a binder that binds the bale in the baling chamber,
• a bale wrapper according to any preceding claim that wraps the bale after binding, and
• a controller that controls operation of the baler-wrapper,
wherein the baler-wrapper is configured to:
• make a bale in the baling chamber,
• bind the bale in the baling chamber by passing at least one strip of stretched film in a circumferential binding pattern around the circumferential side face to form a binding,
• transfer the bale to the bale wrapper, and
• wrap the bale by operating the bale wrapper as defined by any preceding claim to form a bale wrapping.

11. A procedure for wrapping a bale in a bale wrapper, the bale having a bale surface comprising first and second end faces, a circumferential side face, first and second edge regions where the circumferential side face meets the first and second end faces respectively, and a binding comprising at least one strip of stretched film applied in a circumferential binding pattern around the circumferential side face of the bale, the procedure comprising:
• applying first and second strips of stretched film in edge wrapping patterns to the first and second edge regions respectively to form first and second edge wrappings, such that:
• each of the first and second edge wrappings comprises a side portion that covers an end part of the circumferential side face and a face portion that covers an outer part of a respective one of the first and second end faces,
• the side portion of each of the first and second edge wrappings partially overlaps a respective edge portion of the binding, and
• the side portions of the first and second edge wrappings are separated from one another and do not overlap a central portion of the binding, and
• applying at least one strip of stretched film to the bale surface in a longitudinal wrapping pattern that passes over the first and second end faces and the circumferential side face to form a first longitudinal wrapping that fully covers the bale surface,
• wherein the bale wrapping, which does not include the binding, either:
• (a) does not include a central circumferential wrapping that overlaps the side portions of the first and second edge wrappings, or
• (b) includes a central circumferential wrapping that overlaps the side portions of the first and second edge wrappings, and the number of layers of film in the central circumferential wrapping is less than the number of layers of film in the first and second edge wrappings.

12. A procedure according to claim 11, comprising controlling operation of the bale wrapper such that:
• the number of layers of film in the central circumferential wrapping is determined according to the number of layers of stretched film that form the binding, and/or
• the number of layers of stretched film applied to the edge regions of the bale surface to form the first and second edge wrappings, and/or the number of layers of stretched film applied to the bale surface in a longitudinal wrapping pattern to form the longitudinal wrapping, is determined according to the number of layers of stretched film that form the binding, and/or
• the number of layers of film in the central circumferential wrapping is determined according to the number of layers of stretched film that form the binding.

13. A procedure according to claim 11 or claim 12, comprising controlling operation of the wrapper such that the number of layers of stretched film applied to the edge regions of the bale surface to form the first and second edge wrappings, and/or the number of layers of stretched film applied to the bale surface in a longitudinal wrapping pattern to form the longitudinal wrapping, is determined according to the number of layers of stretched film that form the binding.

14. A procedure according to any one of claims 11 to 13, further comprising controlling operation of the wrapper to apply a predetermined minimum number of layers of stretched film to the bale surface, the predetermined minimum number of layers of stretched film comprising the binding, the first and second edge wrappings and the longitudinal wrapping, and optionally controlling operation of the wrapper to apply a predetermined minimum number of layers of stretched film to the entire bale surface and/or to selected locations on the bale surface.

15. A procedure according to any one of claims 11 to 14, further comprising:
• controlling operation of the bale wrapper while forming the first and second edge wrappings to apply a predetermined number of layers of stretched film in each of the first and second edge wrappings, and/or
• controlling operation of the bale wrapper while forming the longitudinal wrapping to apply a predetermined number of layers of stretched film to the circumferential face of the bale in the longitudinal wrapping, and/or
• detecting an operator input and controlling operation of the wrapper according to the operator input to apply a selected minimum number of layers of stretched film to the bale surface, and/or
• displaying the number of layers of stretched film to be applied to the bale surface on an operator display device.

16. A procedure according to any one of claims 11 to 15, wherein the first and second edge wrappings are applied to the bale before the longitudinal wrapping, so that the first and second edge wrappings are located between the binding and the longitudinal wrapping, and optionally
• wherein the longitudinal wrapping comprises a first longitudinal wrapping and a second longitudinal wrapping, and optionally
• wherein the first longitudinal wrapping is applied to the bale before the first and second edge wrappings, so that the first longitudinal wrapping is located between the binding and the first and second edge wrappings, and optionally
• wherein the first and second longitudinal wrappings are applied to the bale after the first and second edge wrappings.

17. A procedure for binding and wrapping a bale in a baler-wrapper comprising a baler having a baling chamber, a binder and a bale wrapper, the bale having a bale surface comprising first and second end faces, a circumferential side face and first and second edge regions where the circumferential side face meets the first and second end faces respectively, the procedure comprising:
• binding the bale in the baling chamber by passing at least one strip of stretched film in a circumferential binding pattern around the circumferential side face to form a binding,
• transferring the bale to the wrapper, and
• wrapping the bale by a procedure according to any one of claims 11 to 16.
